# EUROPEAN PATENT APPLICATION

(11) **EP 1 653 539 A1**
(43) Date of publication of application: **03.05.2006**
(21) Application number: 04025914.5
(22) Date of filing: 02.11.2004
(51) Int. Cl.: H01M 8/02, H01M 8/24, H01M 8/12, H01M 8/04, F28D 9/00, F28F 21/04, F28F 3/08

(54) **Solid oxide fuel cell system**

(71) Applicant: HTceramix S.A., 1024 Ecublens (CH)
(72) Inventor: Schild, John, 8405 Winterthur (CH)
(74) Representative: Dr. Graf & Partner

(57) **Abstract**

The SOFC system (1) for generating electric power by combination of oxygen with a fuel gas stream (R), includes a fuel cell (5) having a fuel gas inlet port (5d), an air stream inlet port (5f) and an exhaust gas stream outlet port (5g), and comprises a heat exchanger (3) with a catalytic fuel processor (3e), wherein said heat exchanger (3) comprises a first fluid path (3a) with an inlet port (3p) connected to an air supply and an air stream outlet port (31) connected to the air stream inlet port (5f); and wherein said heat exchanger (3) comprises a second fluid path (3c) with an outlet port (3q) and an exhaust gas stream inlet port (3n) connected to the exhaust gas stream outlet port (5g); and wherein said fuel channel (3f) comprises a fuel supply and a fuel gas outlet port (3m) connected to the fuel gas inlet port (5d), wherein the fuel channel (3f) is thermally coupled to at least one of the first and second fluid path (3a,3c); and wherein said heat exchanger (3) is a unit separate from the fuel cell (5) and consisting of ceramics.

## Description

### TECHNICAL FIELD

The present invention relates to a solid oxide fuel cell (SOFC) system for generating electric power by combination of oxygen with a fuel gas stream, including a solid oxide fuel cell and a heat exchanger.

### BACKGROUND OF THE INVENTION

Fuel cells which generate electric power by the electrochemical combination of hydrogen and oxygen are well known. In one form of such a fuel cell, an anodic layer and a cathodic layer are separated by an electrolyte formed of a ceramic solid oxide. Such a fuel cell is known in the art as a "solid oxide fuel cell" (SOFC). A fuel gas stream comprising hydrogen, either pure or reformed from hydrocarbons, and oxygen, typically air, are to be brought into the fuel cell. A complete SOFC system typically includes auxiliary subsystems for, among other requirements, generating the fuel gas stream by processing hydrocarbons into carbon monoxide and hydrogen, tempering the reformate fuel and air entering the fuel cell, providing air to the cathode for reaction with hydrogen in the fuel cell, providing air for cooling the fuel cell stack, and burning unused fuel in an afterburner. Such an auxiliary subsystem can attain a complexity comparable to that of the fuel cell.

### SUMMARY OF THE INVENTION

It is an object of the present invention to improve this type of SOFC system in such a manner that the system as a whole can be simplified.

This object is solved with a SOFC system comprising the features of claim 1. Sub claims 2 to 23 concern further advantageous embodiments.

Accordingly, it is an inventive concept to integrate and thermally couple a fuel channel with a heat exchanger, wherein the heat exchanger is a unit separate from the fuel cell and consisting of ceramics. In one preferred embodiment the heat exchanger and the fuel cell are combined with one another in such a manner that the heat exchanger is disposed directly at the fuel cell, and that corresponding inlet port and outlet ports of the fuel cell and the heat exchanger, enabling the gas stream flow between the fuel cell and the heat exchanger, are arranged opposite to each other. By this arrangement, a direct flow transition from the heat exchanger to the fuel cell can be achieved. The heat exchanger comprises various conveying means which are arranged in a way that a separate socalled manifold can be omitted. In other words the heat exchanger itself comprises various conveying means and forms therefore a kind of manifold. The heat exchanger, consisting of ceramics with poor thermal conductivity, forms also a heat insulation element between the side directed to the fuel cell side having high gas temperatures, and the opposite side having lower gas temperatures. As a result of this coupling, space is saved, since an additional housing and pipeline systems can be omitted, and because of the poor thermal conductivity a small heat exchanger is sufficient to separate the high temperature side from the low temperature side. In addition, the manufacturing costs of the heat exchanger are low, leading to a fuel cell system with a reduction in space and costs. Moreover the fuel channel in the heat exchanger may also comprise a catalytic fuel processor. Moreover, to increase the preheating of the air, the heat exchanger may comprise a chamber which allows the residual gas from the fuel cell to be subjected to an afterburning process. Due to the successful combustion in the heat exchanger, this residual energy is then also, at least partly, supplied to the reactants, which are to be heated, preferably air or oxygen is used for this purpose. Moreover to improve the control of the reactant's temperature and/or the reactant's amount, the heat exchanger may comprise a separate air stream bypass, which joins the preheated air stream before entering the fuel cell. A temperature sensor, a control system and a valve may be suitable to control temperature and/or amount of the air stream supplied into the fuel cell. Moreover the whole fuel cell system may be built very small, preferably in form of a pile, the fuel cell being arranged on top of the heat exchanger. Moreover all conveying means between the fuel cell and the heat exchanger may be arranged within the area in common of the heat exchanger and the fuel cell, which allows building a stack without, from the outside, any visible connection between the fuel cell and the heat exchanger.

### BRIEF DESCRIPTION OF THE DRAWINGS

These and other features and advantages of the invention will be more fully understood and appreciated from the following description of certain exemplary embodiments of the invention taken together with the accompanying drawings, in which:
Fig. 1 is a schematic diagram of a SOFC system;
Fig. 2 is an isometric cross-sectional view of a SOFC system;
Fig. 3 is an isometric cross-sectional view of another SOFC system;
Fig. 4 is an isometric view of a heat exchanger;
Fig. 5a is a cross-sectional view of the heat exchanger taken along line A-A in Fig. 4;
Fig. 5b is a cross-sectional view of the heat exchanger taken along line B-B in Fig. 4;
Fig. 6 is an isometric view of the SOFC system from below;
Fig. 7 is a schematic diagram of another SOFC system without an air stream bypass;
Fig. 8 is a schematic view of a fuel cell stack with internal manifolding;
Fig. 9 is a schematic view of a fuel cell stack with internal fuel gas and air manifolding but external exhaust air manifolding
Fig. 10 is a schematic view of a fuel cell stack with combined external air and internal fuel gas manifolding;
Fig. 11 is a schematic view of a fuel cell stack with external manifolding.

### DESCRIPTION OF THE PREFERRED EMBODIMENTS

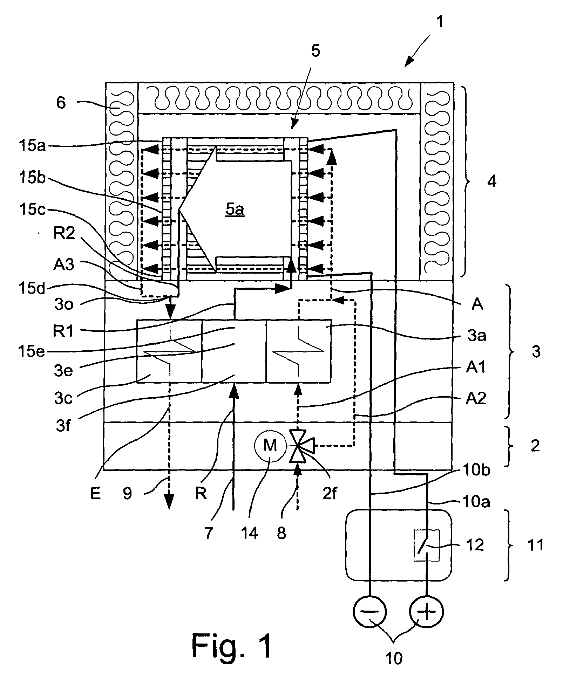

Figure 1 discloses a SOFC system 1 comprising an interface base 2, a heat exchanger 3 and a high temperature unit 4, comprising a SOFC fuel cell 5 and insulation 6. The interface base 2, the heat exchanger 3 and the fuel cell 5 are arranged one on top of the other, forming an arrangement similar to a pile. This pile can be arranged in different ways, for example also vice versa as disclosed in figure 1, with the fuel cell 5 on the bottom end and the interface base 2 on the top end. The fuel cell 5 is supplied with an air stream A and a fuel gas stream R1. An electrochemical reaction 5a takes place within the fuel cell stack. A cathode exhaust A3 and an anode exhaust R2 leaving the fuel cell stack. The cathode exhaust A3 is typically primarily air (oxygen depleted). The anode exhaust R2 contains unoxidized fuel species such as carbon monoxide, hydrogen containing some remaining hydrocarbons.

The heat exchanger 3 comprises a first fluid path 3a, a second fluid path 3c and a fuel channel 3f, which might be catalytic fuel processor 3e, wherein all of them are thermally coupled. The heat exchanger 3 consisting of ceramics with various gas stream conveying means. The interface base 2 is connected with a reactant gas supply 7, an exhaust gas outlet 9 and an air supply 8 leading to a valve 2f which is electrically operated by a drive 14. Depending on the position of the valve 2f, the ratio between the air stream A1 and the bypass air stream A2 is varied. The air stream A1 is preheated by passing through the first fluid path 3a of the heat exchanger 3. The anode exhaust R2 and the cathode exhaust A3 is directed into an afterburner 3o which is part of the heat exchanger 3. The afterburner 3o burns the unused fuel in the SOFC stack exhaust. The afterburner 3o may be a separate chamber within the heat exchanger 3, or for example arranged within the second fluid path 3c. The afterburner 3o may comprise catalytic material, for example a catalytic coating of the walls. The exhaust gas E is fed through the second fluid path 3c and the heat produced by the afterburner 3o is exchanged to the first fluid path 3a and the fuel channel 3f, to preheat the air stream A1, and, if necessary the fuel gas stream R. It is preferred to use the cathode exhaust A3 in the afterburner 3o, as this oxygen containing stream A3 is heated in the fuel cell 5, in addition a separate oxygen containing stream may be added, to permit complete combustion of the remaining fuel in the afterburner 3o.

The SOFC system 1 comprises a control unit 11, which is connected to various sensors 15a-15e, in particular temperature sensors, as well as to drive means 14, to move the valve 2f and to control the various temperatures in the SOFC system 1. The control unit 11 also comprises an electrical output 10, which is connected with the cathode and anode current collector 10a, 10b, as well as a electronic switch 12.

The heat exchanger 3 consists of ceramics. This means the heat exchanger 3 is made of hard brittle material produced from non-metallic minerals by firing at high temperatures. These materials include, but are not limited to ceramics, zirconium phosphate, silicon nitride, aluminium nitride, molybdenum disilicide, zirconia toughened aluminium oxide, aluminium phosphate, zirconium oxide, titanium carbide, aluminium oxide, zirconium carbide, zirconium disilicide, alumino-silicates, and silicon carbide. Ceramics is an excellent choice for the heat exchanger 3 because of the low thermal conductivity and the low thermal expansion coefficient.

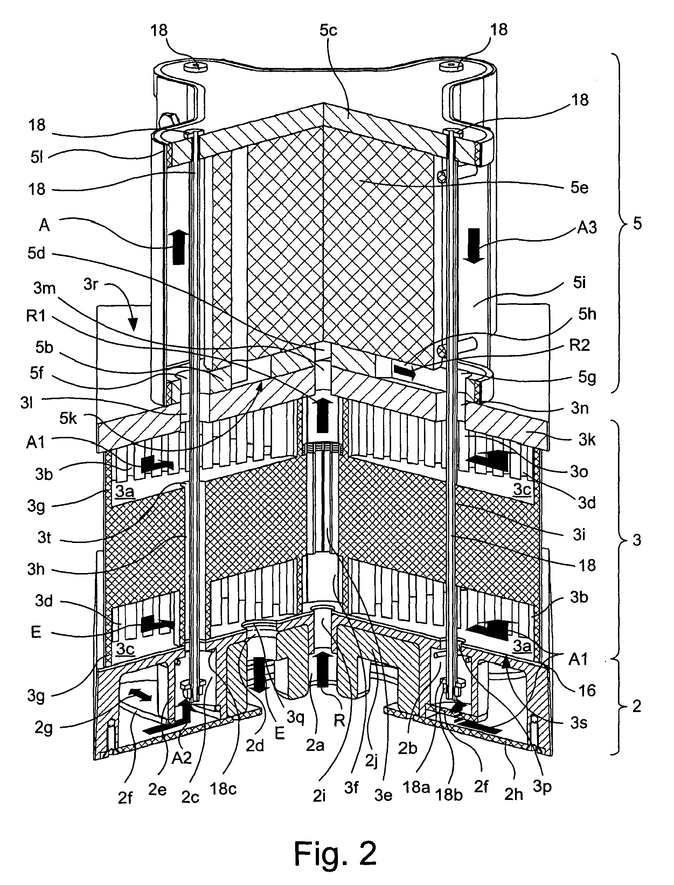

The SOFC system 1 according to figure 2 includes a fuel cell 5 having a fuel gas inlet port 5d, an air stream inlet port 5f and an exhaust gas stream outlet port 5g, and comprises a heat exchanger 3 with a fuel channel 3f comprising a catalytic fuel processor 3e, wherein said heat exchanger 3 comprises a first fluid path 3a with an inlet port 3p connected to an air supply 7 and an air stream outlet port 31 connected to the air stream inlet port 5f, and wherein said heat exchanger 3 comprises a second fluid path 3c with an outlet port 3q connected to the exhaust gas outlet 9 and an exhaust gas stream inlet port 3n connected to the exhaust gas stream outlet port 5g, and wherein said catalytic fuel processor 3e comprising an inlet port 2i connected to a fuel supply 7 and a fuel gas outlet port 3m connected to the fuel gas inlet port 5d, wherein the catalytic fuel processor 3e is thermally coupled to at least one of the first and second fluid path 3a,3c, and wherein said heat exchanger 3 is a unit separate from the fuel cell 5 and consisting of ceramics. The fuel cell 5 comprising a bottom plate 5b, a top plate 5c and there between a plated stack 5e. Where the cathode exhaust stream A3 and the anode exhaust stream R2 meet, they form an afterburner 3o.

The heat exchanger 3 is a monolithic ceramic. The heat exchanger 3 could also consist of various ceramic parts joined together to form the heat exchanger 3. The heat exchanger 3 comprising a base plate 3k suitable to be connected with the fuel cell 5. In one preferred embodiment the base plate 3k is sintered with the part of the heat exchanger 3 below the base plate 3k, forming one single, monolithic piece of ceramic. In one preferred embodiment the fuel cell 5 is arranged on top of the base plate 3k, and the base plate 3k having a thickness of being able to carry the fuel cell 5. In one preferred embodiment the air stream outlet port 31, the fuel gas outlet port 3m and the exhaust gas stream inlet port 3n are arranged on a common front surface 3r of the base plate 3k. In one preferred embodiment are the inlet port 3p connected to the air supply, the outlet port 3q of the exhaust gas stream E and the inlet port 2i connected to the fuel supply R arranged on a side 3s of the heat exchanger 3 opposite to the front surface 3r.

In one preferred embodiment are the fuel gas inlet port 5d, the air stream inlet port 5f and the exhaust gas stream outlet port 5g arranged on a common front surface 5k of the fuel cell 5. In the most preferred embodiment the fuel cell 5 is arranged on top of the heat exchanger 3, wherein the corresponding inlet ports 5f, 3n,5d and outlet ports 31,5g,3m, enabling the gas stream flow between the fuel cell 5 and the heat exchanger 3, are arranged opposite to each other, to enable a direct flow transition between the fuel cell 5 and the heat exchanger 3, as shown in figure 2. As can be seen, this arrangement allows building a very compact SOFC system 1. The interface base 2 being the cold side and the fuel cell 5 being the hot side of the SOFC system 1, and the interface base 2 and the fuel cell 5 being separated by the ceramic heat exchanger 3. The heat exchanger 3 has poor thermal conductivity from the fuel cell 5 to the interface base 2. The heat exchanger 3 also comprises all fluid conducting connections between the fuel cell 5 and the interface base 2, thus forming a manifold of ceramics. All fluid conducting connections are arranged within the heat exchanger 3. This ceramic heat exchanger 3 allows building a very compact, cheap and reliable SOFC system 1.

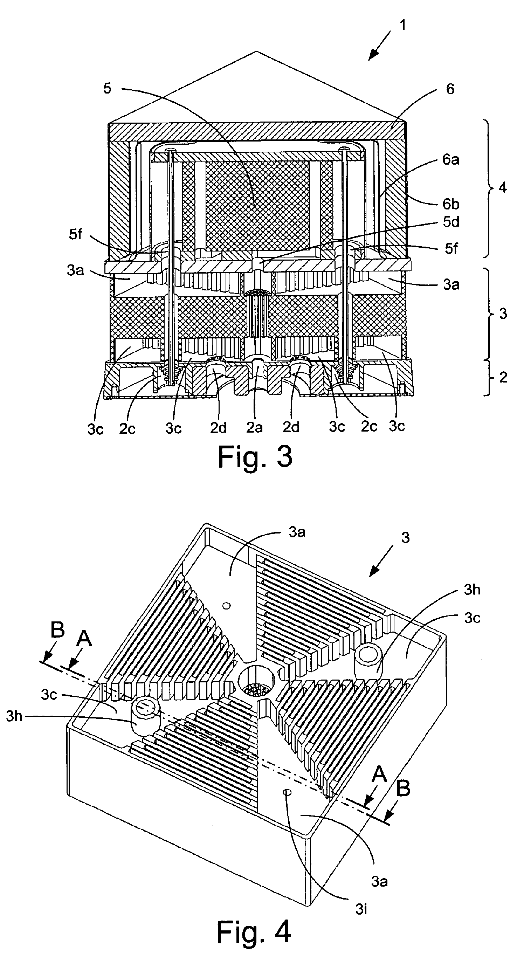

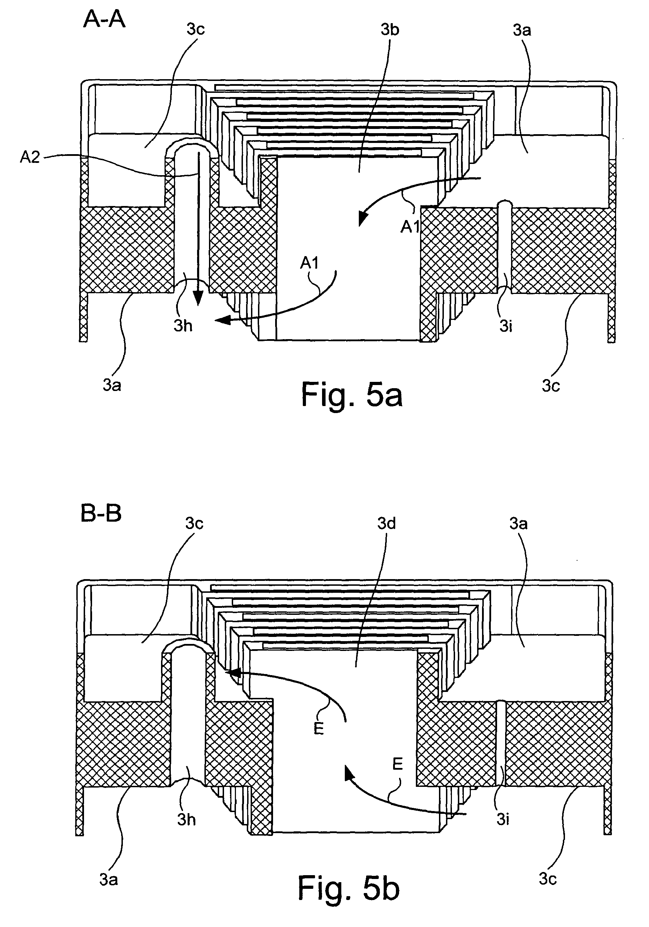

In a preferred embodiment each of the first and second fluid path 3a,3c comprise a plurality of first and second channels 3b,3d separated by a thin wall, to allow a heat exchange between the exhaust gas stream E flowing in the second channel 3d and the air stream A1 flowing in the first channel 3b. Figure 4 shows the heat exchanger 3 according to figure 2 in detail, with a plurality of first and second channels 3b,3d. Figure 5a discloses a cross-sectional view of the heat exchanger 3 taken along line A-A in figure 4, and figure 5b a cross-sectional view along the line B-B in figure 4. The plurality of first and second channels 3b,3d are arranged to form a counter cross flow between the first and second fluid path 3a,3c, as can be seen with the crossing flow of the air stream A1 and exhaust gas stream E in figures 5a,5b.

The afterburner 3o may also be arranged within the second fluid path 3c, in that the cathode exhaust stream A3 and the anode exhaust stream R2 are guided either separately or as disclosed in figure 2 within the heat exchanger 3, to form therein an afterburner 3o.

The catalytic fuel processor 3e disclosed in figure 2 is arranged within the channel 3f, therein a ceramic cell structure forming channels in the direction of flow. The walls of this cell structure carrying catalytic substances to form a catalytic fuel processor. Preferable these catalytic substances are arranged on the ceramic material of the heat exchanger. In combination with preprocessed fuel or pure hydrogen the catalytic fuel processor 3e may be replaced by a channel 3f only, without further structures inside.

In a preferred embodiment, the heat exchanger 3 comprises an air stream bypass 3h with an inlet port 2c connected to an air supply 8 and an air stream bypass outlet port 3t disposed in fluid communication with the air stream outlet port 31. At least one valve 2f, comprising a valve seat 2e and a plate 2f moveable in direction 2g by a drive 14, is disposed to control at least one of the air streams A1,A2 in the first fluid path 3a and the air stream bypass 3h. This allows to control the temperature of the air stream A entering the air stream inlet port 5f. The valve 2f is part of the interface base 2. In a preferred embodiment, the interface base 2 comprises two or four valves 2f, one for each air stream A1,A2. Each valve 2f can be activated independently, to control each air stream A1, A2 as well as the total amount of the air stream A. The interface base 2 is disposed below the heat exchanger 3, the interface base 2 comprising a fuel gas stream inlet port 2a, an air stream inlet port 2b,2c and a exhaust gas stream outlet port 2d, which are fluidly connected to the corresponding first and second fluid path 3a,3c, the fuel gas stream channel 3f and the exhaust gas stream outlet port 3q of the heat exchanger 3. The fuel gas stream inlet port 2a, the air stream inlet port 2b, 2c and the exhaust gas stream outlet port 2d are arranged at the bottom of the interface base 2. The interface base 2 is coupled to the heat exchanger 3 so that there is a direct flow transition from the interface base 2 to the heat exchanger 3, the heat exchanger 3 being placed on top of the interface base 2 and the fuel cell 5 being placed on top of the heat exchanger 3. In a preferred embodiment, the interface base 2 and the fuel cell 5 are connected by compressing means 18 extending in holes 3i or in the bypass 3h through the heat exchanger 3. The compressing means 18 disclosed in figure 2 comprising a ceramic disk 18a, a nut 18b and a spring 18c.

To improve the heat exchange, the walls of the heat exchanger 3 forming the first and second fluid path 3a,3c as well as the catalytic fuel processor 3e may be structured or rough. According to figure 2, the interface base 2 is of metal, comprising a exhaust gas insulation 2j of ceramics, and being covered by a thin sealing material 16. The outer wall 3g of the heat exchanger 3 lying on the sealing material 16, to enact a preferable gas tight connection, so the first and second fluid path 3a,3c is gastight to the outside of the SOFC system 1.

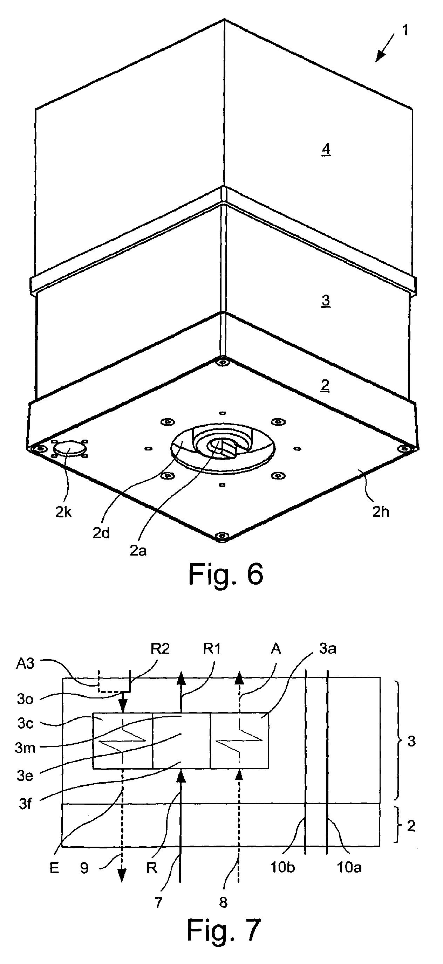

Figure 3 shows another SOFC system 1 built in form of a stack comprising the interface base 2, the heat exchanger 3 and the high temperature unit 4. The high temperature unit 4 comprises the fuel cell 5 arranged within an insulation 6 with an inner and outer metallic shell 6a,6b. Due to the low thermal conductivity of the ceramic heat exchanger 3, the height of the heat exchanger 3 may be very small, for example in the range of 5 cm to 30 cm. This allows building a small and compact SOFC system 1, as shown in figure 6. In a preferred embodiment all gas stream inlet and outlet ports, the fuel gas stream inlet port 2a, the exhaust gas stream outlet port 2d, the air stream inlet port 2k as well as other ports and electric connectors are arranged on the bottom side of the interface base 2. In one embodiment, the inner and outer metallic shell 6a,6b may comprise or form a fluid tight room, in particular a gas tight room. This room may contain a vacuum to improve insulation. This room may also comprise a fluid inlet and outlet, to create a vacuum or to pressurize the room with a certain substance like air. The insulation value of this insulation 6 may be varied depending on the pressure and the used substance, allowing modifying the insulation value during operation of the SOFC system 1 by increasing the pressure or the vacuum within the insulation 6 by means like a pump and sensors, which are not shown in figure 3.

Figure 7 shows a heat exchanger 3 without a bypass air stream A2, which means the whole air stream A is guided through the first fluid path 3a.

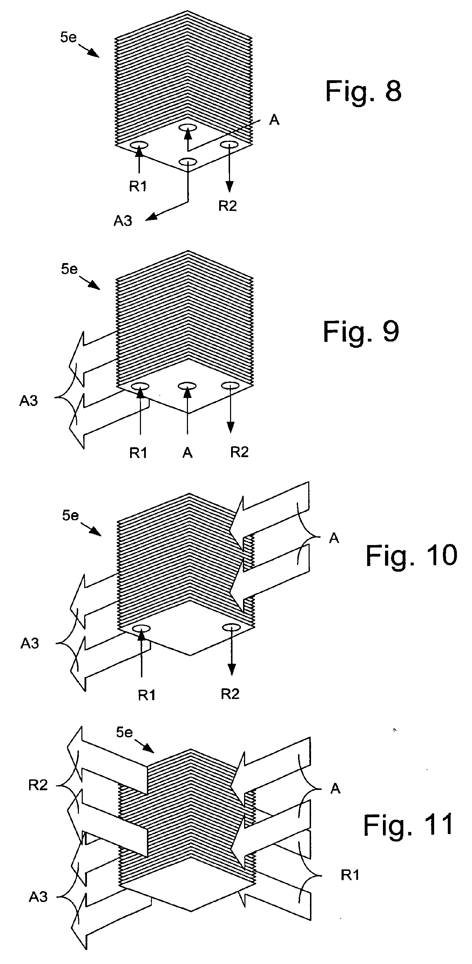

Figures 8 to 11 show in schematic views different embodiments of fuel cell stack 5e which are connected to a heat exchanger 3, which is not shown, but which would be ranged below the fuel cell stack 5e. All heat exchangers 3 suitable to accommodate a fuel cell stack 5e as disclosed in figures 8 to 11 may be built as disclosed in figure 2 or 3.

In the embodiment according to figure 10, the fuel cell stack 5e is arranged on top of the heat exchanger 3, and regarding the fuel gas stream R1 and the anode exhaust stream R2, there is a direct flow transition between them. In contrast, the air stream A is not feed from the bottom but from the side of the fuel cell stack 5e, and the cathode exhaust stream A3 escaping also from a side of the fuel cell stack 5e, but both streams A and A3 escaping within the fuel cell 5 to the heat exchanger 3. This embodiment requires manifolding means like pipes to provide gas connecting means between the heat exchanger 3 and the fuel cell stack 5e for the streams A and A3. The embodiment disclosed in figure 2 comprises a fuel cell stack 5e as disclosed in figure 10, whereas the manifolding means for the streams A and A3 are formed between the fuel cell stack 5e and a thin metal 51 surrounding the fuel cell stack 5e. This metal 51 is gas tightly connected with the bottom plate 5b and the top plate 5c.

Figure 8 discloses a further embodiment, with a fuel cell stack 5e having an air stream A and a fuel gas stream R1 entering at the bottom and the anode exhaust stream R2 and the cathode exhaust stream A3 escaping on the same side at the bottom of the fuel cell stack 5e. The fuel cell stack 5e and the heat exchanger 3 are built to comprise also the entire manifolding. Between the heat exchanger 3 and the fuel cell 5, additional pipes may be arranged, to allow an additional gas flow between the heat exchanger 3 and the fuel cell 5 or the insulation 6.

In the embodiment according to figure 9, the fuel cell stack 5e is arranged on top of the heat exchanger 3, and regarding the fuel gas stream R1, the anode exhaust stream R2 and the Air stream A, there is a direct flow transition between them. In contrast, the cathode exhaust stream A3 is not escaping at the bottom but from the side of the fuel cell stack 5e. This embodiment may require additional manifolding means like pipes to provide gas connecting means between the heat exchanger 3 and the fuel cell stack 5e for the stream A3. But in case of a gas tight Insulation 51 surrounding the fuel cell 5, the cathode exhaust may be guided without additional piping to the heat exchanger 3.

In the embodiment according to figure 11, the fuel cell 5 including the fuel cell stack 5e may be arranged separate from the heat exchanger 3. This embodiment requires additional manifolding means like pipes, to provide gas connecting means between the heat exchanger 3 and the fuel cell 5 for the streams A, A3, R1 and R2.

## Claims

1. A SOFC system (1) for generating electric power by combination of oxygen with a fuel gas stream (R), including a fuel cell (5) having a fuel gas inlet port (5d), an air stream inlet port (5f) and an exhaust gas stream outlet port (5g), and comprising a heat exchanger (3) with a fuel channel (3f), wherein said heat exchanger (3) comprises a first fluid path (3a) with an inlet port (3p) connected to an air supply and an air stream outlet port (31) connected to the air stream inlet port (5f); and wherein said heat exchanger (3) comprises a second fluid path (3c) with an outlet port (3q) and an exhaust gas stream inlet port (3n) connected to the exhaust gas stream outlet port (5g); and wherein said fuel channel (3f) comprises a fuel supply and a fuel gas outlet port (3m) connected to the fuel gas inlet port (5d), wherein the fuel channel (3f) is thermally coupled to at least one of the first and second fluid path (3a,3c); and wherein said heat exchanger (3) is a unit separate from the fuel cell (5) and consisting of ceramics.

2. The SOFC system of claim 1 wherein the heat exchanger (3) is a monolithic type heat exchanger (3).

3. The SOFC system of one of the proceeding claims wherein the heat exchanger (3) comprising a base plate (3k) suitable to be connected with the fuel cell (5).

4. The SOFC system of claim 3 wherein the fuel cell (5) is arranged on top of the base plate (3k), and the base plate (3k) being able to carry the fuel cell (5).

5. The SOFC system of one of the proceeding claims wherein the air stream outlet port (31), the fuel gas outlet port (3m) and the exhaust gas stream inlet port (3n) are arranged on a common front surface (3r) of the heat exchanger (3).

6. The SOFC system of claim 5 wherein the inlet port (3p) connected to the air supply, the outlet port (3q) of the exhaust gas stream and the fuel channel (3f) connected to the fuel supply are arranged on a side of the heat exchanger (3) opposite to the front surface (3r).

7. The SOFC system of one of the proceeding claims wherein the fuel gas inlet port (5d), the air stream inlet port (5f) and the exhaust gas stream outlet port (5g) are arranged on a common front surface (5k) of the fuel cell (5).

8. The SOFC system of one of the proceeding claims wherein the fuel cell (5) is arranged on top of the heat exchanger (3), and wherein the corresponding inlet ports (5f, 3n,5d) and outlet ports (31,5g,3m) enabling the gas stream flow between the fuel cell (5) and the heat exchanger (3) are arranged opposite to each other, to enable a direct flow transition between the fuel cell (5) and the heat exchanger (3).

9. The SOFC system of one of the proceeding claims wherein each of the first and second fluid path (3a,3c) comprise a first and second channel (3b,3d) separated by a thin wall, to allow a heat exchange between the exhaust gas stream flowing in the second channel (3d) and the air stream flowing in the first channel (3b).

10. The SOFC system of claim 9 wherein there is a plurality of first and second channels (3b,3d).

11. The SOFC system of claim 9 or 10 wherein the first and second channels (3b,3d) are arranged to form a counter cross flow between the first and second fluid path (3a,3c).

12. The SOFC system of one of the proceeding claims wherein the heat exchanger (3) comprises an afterburner (3o) arranged in the second fluid path (3c).

13. The SOFC system of one of the proceeding claims wherein the fuel channel (3f) comprises a catalytic fuel processor (3e), in particular a layer of catalytic substances.

14. The SOFC system of one of the proceeding claims wherein the heat exchanger (3) comprises an air stream bypass (3h) with an inlet port (2c) connected to an air supply and an air stream bypass outlet port (3t) disposed in fluid communication with the air stream outlet port (31).

15. The SOFC system of one of the proceeding claims wherein at least one valve (2f) is disposed to control at least one of the air streams in the first fluid path (3a) and the air stream bypass (3h).

16. The SOFC system of claim 15 wherein the valve (2f) is disposed below the heat exchanger (3).

17. The SOFC system of one of the proceeding claims, wherein an interface base (2) is disposed below the heat exchanger (3), the interface base (2) comprising a fuel gas stream inlet port (2a), an air stream inlet port (2b,2c) and a exhaust gas stream outlet port (2d), which are fluidly connected to the corresponding first and second fluid path (3a,3c), the fuel gas stream channel (3f) and the exhaust gas stream outlet port (3q) of the heat exchanger (3).

18. The SOFC system of claim 17 wherein the fuel gas stream inlet port (2a), the air stream inlet port (2b, 2c) and the exhaust gas stream outlet port (2d) are arranged at the bottom of the interface base (2).

19. The SOFC system of one of claims 17 and 18 wherein the interface base (2) is coupled to the heat exchanger (3) so that there is a direct flow transition from the interface base (2) to the heat exchanger (3), the heat exchanger (3) being placed on top of the interface base (2) and the fuel cell (5) being placed on top of the heat exchanger (3).

20. The SOFC system of claim 19 wherein the interface base (2) and the fuel cell (5) are connected by compressing means (18) extending through the heat exchanger (3).

21. The SOFC system of one of the proceeding claims wherein at least one of the first and second fluid path (3a,3c) comprises a channel with a rough surface.

22. The SOFC system of one of the proceeding claims wherein the fuel cell (5) is arranged within an insulation (6), the insulation comprising a fluid tight room with a fluid inlet and outlet, to create a vacuum within the room and/or to pressurize the room.

23. The SOFC system of one of the proceeding claims comprising a control unit (11) as well as sensors (15a-15e) and a valve (2f) being connected with the control unit (11), the valve (2f) determines the flow of an air stream (A1) and a bypass air stream (A2), the air stream (A1) and the bypass air stream (A2) forming a fuel cell air stream (A) supplied to the fuel cell (5), and the temperature and/or the amount of the fuel cell air stream (A) depending on the sensed values of the sensors (15a-15e) and being controlled by the control unit (11).
